# EUROPEAN PATENT APPLICATION

(11) **EP 4 265 757 A1**
(43) Date of publication of application: **25.10.2023**
(21) Application number: 23163758.8
(22) Date of filing: 23.03.2023
(51) Int. Cl.: C22B 3/04, C22B 3/06, C22B 11/00, C22B 7/00, C01G 55/00, C25C 1/20

(54) **METHOD FOR CLEAN RECOVERY OF PALLADIUM**

(30) Priority: 22.04.2022 CN 202210430805
(71) Applicant: Institute of Process Engineering, Chinese Academy of Sciences, Beijing 100190 (CN)
(72) Inventor: ZHANG, Hui, Beijing, 100190 (CN); YU, Ying, Beijing, 100190 (CN); XUE, Tianyan, Beijing, 100190 (CN); YAN, Zhanpeng, Beijing, 100190 (CN); QI, Tao, Beijing, 100190 (CN)
(74) Representative: Isern Patentes y Marcas S.L.

(57) **Abstract**

A method for clean recovery of palladium is provided, including the following steps: mixing a palladium-containing material, a Ce⁴⁺-containing acidic solution, and an additive, subjecting a resulting mixture to leaching to obtain a Pd²⁺-containing solution, and subjecting the Pd²⁺-containing solution to electrolysis to obtain palladium. In the method, the palladium-containing material is subjected to solution leaching with Ce⁴⁺ as an oxidative leaching agent and a chlorine-containing additive. After leaching is complete, a Ce³⁺ and Pd²⁺-containing leaching liquor is subjected to electrolysis to realize the green regeneration of Ce⁴⁺ and palladium. The method of the present disclosure does not lead to the generation of NOx and waste liquid. The present disclosure can significantly reduce the environmental impact and production cost and has excellent economic benefits and application prospects.

## Description

### CROSS REFERENCE TO THE RELATED APPLICATIONS

This application is based upon and claims priority to Chinese Patent Application No. 202210430805.4, filed on April 22, 2022, the entire contents of which are incorporated herein by reference.

### TECHNICAL FIELD

The present disclosure belongs to the technical field of hydrometallurgy and relates to clean production technology for wet recovery of palladium and in particular to a method for clean recovery of palladium.

### BACKGROUND

Palladium is a platinum-group element (PGE) with excellent plasticity, stability, and catalytic activity, which is widely used in fields of aerospace, nuclear energy, electronics, catalysts, and the like. Palladium is also regarded as a strategic reserve metal due to its uniqueness and scarcity. Platinum-group metals (PGMs) are scarce and expensive, and thus the recovery of PGMs is of great significance.

Palladium nitrate can be used as an analytical reagent and also as a raw material for the synthesis of various palladium compounds and catalysts. Palladium nitrate is currently prepared through simple dissolution with nitric acid. Due to the uncertainty of palladium raw materials, the direct dissolution with nitric acid has disadvantages such as long palladium dissolution time, low solubility, and low direct yield of palladium nitrate. In addition, the dissolution of palladium each time requires a large amount of nitric acid, and the repeated palladium dissolution process has disadvantages such as large energy consumption and NOx production that causes heavy environmental pollution.

CN109592722A discloses a method for preparing palladium nitrate. A high-purity palladium powder is added to a reactor, then an analytically-pure concentrated nitric acid solution with a mass percentage concentration of 65% to 68% is added at a mass 4 to 9 times the mass of the palladium powder. The temperature in the reactor is maintained at 10°C to 70°C, and the resulting reaction solution is thoroughly stirred. Hydrochloric acid with a mass concentration of 37% is diluted to 1% to 2% and added to the resulting reaction solution until a mass of HCl is 0.005% to 0.25% of the mass of the palladium powder in the reactor. The resulting system is continuously stirred to allow a reaction for 0.5 h to 4 h to obtain a palladium nitrate solution with the palladium powder completely dissolved. The above method commonly has the following problems: (1) The reaction between nitric acid and palladium will produce a large amount of nitrogen oxide gas. (2) During the reaction process, nitric acid, aqua regia, a NOx tail gas absorber, and the like are used, which increases the cost, leads to a large amount of waste liquor, and causes heavy environmental pollution.

CN105671304A discloses a method for recovering rare earth and platinum-group metals (PGMs) from a failed catalyst for purifying an automobile exhaust gas, including the following steps: (1) fine grinding; (2) sulfation roasting; (3) dilute acid leaching: the roasting product obtained in step (2) is subjected to leaching with dilute sulfuric acid, and the resulting mixture is filtered to obtain a rare earth sulfate solution and an insoluble PGM-containing residue; (4) recovery of rare earth: sodium sulfate is added to the rare earth sulfate solution obtained in step (3) to produce a complex sulfate precipitate, and a lanthanum cerium rare earth oxide (REO) is prepared with the precipitate; and (5) recovery of PGMs: PGMs are leached from the insoluble residue obtained in step (3) with hydrochloric acid and chlorine, and a leaching liquor is treated by the existing separation, purification, and refining process to obtain the PGMs of platinum, palladium, and rhodium, separately. In the above method, PGMs cannot be dissolved by sulfation roasting and are enriched in the insoluble residue. The leaching of PGMs with hydrochloric acid and chlorine is a traditional technology, and the use of highly-toxic chlorine has a safety risk.

CN103834808A discloses a method for recovering rare and precious metals from a scrapped automotive electronic device, where a mixed solution of hydrochloric acid and sodium hypochlorite is used to leach rare and precious metals. The use of sodium hypochlorite as an oxidizing agent will also produce a large amount of highly-toxic chlorine. The above method includes the following steps: (1) disassembly of a scrapped automotive component; (2) crushing of the scrapped automotive component that includes rare and precious metals; (3) mixing and roasting of a crushed powder and sodium hydroxide; (4) washing with hot water; (5) filtering the resulting mixture, wherein aluminum and molybdenum are recovered from the resulting filtrate, and the resulting filter residue is dissolved with an acid and then filtered to obtain a rare earth and iron ion-containing solution and a precious metal-containing filter residue; (6) preparing an REO with the rare earth and iron ion-containing solution obtained after the filtration in step (5); (7) leaching the precious metal-containing filter residue obtained in step (5) with a mixed solution of hydrochloric acid and sodium hypochlorite to obtain a solution containing gold, palladium, platinum, and rhodium, and extracting gold by electrowinning; (8) platinum extraction; and (9) using the filtrate with platinum removed in step (8) to prepare a crude palladium powder. In the above method, formic acid is used to extract crude palladium under vigorous stirring, which leads to low purity and efficiency; an acid solution such as hydrochloric acid in the pre-process results in poor safety.

Therefore, a brand-new, clean, and economical method for recovering palladium is needed.

### SUMMARY

In view of the problems such as high waste acid and waste gas emissions, low palladium recovery rate, and high treatment cost of the existing recovery technology, the present disclosure provides a method for clean recovery of palladium, where a palladium-containing material is subjected to solution leaching with Ce⁴⁺ under the action of an additive, and then a leaching liquor obtained after a leaching reaction is completed is subjected to electrolysis to achieve Ce⁴⁺ regeneration and palladium preparation, which eliminates the generation of pollutants such as nitrogen oxides from the source and realizes the clean extraction of palladium.

In order to achieve the above objective, the present disclosure adopts the following technical solutions:

The present disclosure provides a method for clean recovery of palladium, including mixing a palladium-containing material, a Ce⁴⁺-containing acidic solution, and an additive and conducting a leaching reaction to obtain a Pd²⁺-containing solution.

Preferably, the method further includes: subjecting the Pd²⁺-containing solution to electrolysis, such that palladium is produced at a cathode and a Ce⁴⁺-containing acidic solution reusable for leaching is produced at an anode.

In the present disclosure, Ce⁴⁺ is used as a leaching agent and an oxidizing agent to conduct leaching under the action of an additive, during which the following leaching reaction occurs: 2Ce⁴⁺ + Pd = 2Ce³⁺ + Pd²⁺. In the present disclosure, Ce⁴⁺ is used instead of the traditional nitric acid or aqua regia for leaching of a palladium-containing material. When a palladium-containing material is subjected to leaching with Ce⁴⁺ as an oxidative leaching agent and chlorine as an additive, almost no waste gas is produced during the leaching process. Therefore, the present disclosure provides a safe green palladium recovery process without waste gas emission.

In the present disclosure, the leaching is achieved by mixing a palladium-containing material, a Ce⁴⁺-containing acidic solution, and an additive to allow a reaction.

Preferably, the Ce⁴⁺-containing acidic solution includes sulfuric acid and/or nitric acid.

Preferably, the additive includes chlorine, including, but not limited to, an inorganic chloride and a chlorine-containing organic matter. For example, the additive may be chlorine, sodium chloride, potassium chloride, potassium chlorate, hydrochloric acid, chlorobenzene, monochloromethane, or the like, but is not limited to the listed compounds. Other chlorine-containing substances are also suitable for the method.

Preferably, a concentration of Ce⁴⁺ in the Ce⁴⁺-containing acidic solution is higher than or equal to 0.05 mol/L, such as 0.05 mol/L, 0.08 mol/L, 0.1 mol/L, 0.2 mol/L, 0.5 mol/L, or 1 mol/L, but the concentration is not limited to the listed values, and any other values in the range that are not listed are also applicable.

Preferably, a concentration of chlorine in a mixed solution obtained after the mixing is 0.01 mol/L to 0.5 mol/L, such as 0.01 mol/L, 0.02 mol/L, 0.08 mol/L, 0.1 mol/L, 0.2 mol/L, or 0.5 mol/L, but the concentration is not limited to the listed values, and any other values in the range that are not listed are also applicable.

The present disclosure has no special limitations on a liquid-to-solid ratio of the Ce⁴⁺-containing acidic solution to the palladium-containing material during the leaching reaction, which can be a conventional liquid-to-solid ratio or can be adjusted according to an actual process. During an actual process, tubular continuous leaching can also be adopted, where the Ce⁴⁺-containing acidic solution is allowed to flow through a pipeline, and the liquid-to-solid ratio is not specifically restricted.

Preferably, the method may further include the following step: subjecting the Pd²⁺-containing solution to electrolysis, such that palladium is produced at a cathode and a Ce⁴⁺-containing acidic solution reusable for leaching is produced at an anode.

In the present disclosure, the solution with Pd²⁺ and Ce³⁺ obtained after the leaching reaction is subjected to electrolysis, such that palladium is produced at a cathode and the regeneration of Ce⁴⁺ is achieved at an anode, where the following reaction occurs during the electrolysis: 2Ce³⁺ + Pd²⁺ = 2Ce⁴⁺ + Pd, that is, a reverse reaction of the leaching reaction. An electrolytic solution can be recycled and no waste liquid is produced, which ensures the overall economy and environmental friendliness of the method.

As a preferred technical solution for the present disclosure, the method includes the following steps:
(1) mixing the palladium-containing material, a Ce⁴⁺-containing sulfuric acid and/or nitric acid solution, and a chlorine-containing additive to obtain a mixed solution and subjecting the mixed solution to a leaching reaction at a temperature higher than or equal to 40°C to obtain a Pd²⁺-containing solution, where a concentration of Ce⁴⁺ in the Ce⁴⁺-containing acidic solution is higher than or equal to 0.05 mol/L and a concentration of chlorine in the mixed solution is 0.01 mol/L to 0.5 mol/L; and
(2) subjecting the Pd²⁺-containing solution obtained in step (1) to electrolysis, such that palladium is produced at a cathode and a Ce⁴⁺-containing acidic solution reusable for leaching is produced at an anode.

Compared with the prior art, the present disclosure has the following beneficial effects.
(1) The present disclosure provides a method for clean recovery of palladium, where Ce⁴⁺ is used instead of nitric acid to leach palladium based on the leaching reaction of 2Ce⁴⁺ + Pd = 2Ce³⁺ + Pd²⁺, and no NOx is produced during the leaching reaction, which avoids the environmental pollution caused by NOx during the traditional nitric acid leaching process.
(2) The present disclosure provides a method for clean recovery of palladium, where a leaching liquor is subjected to electrolysis, such that Ce⁴⁺ is regenerated and palladium is precipitated with a palladium leaching rate of higher than or equal to 99%, which achieves the recycling of the mother liquor and the near-zero emission of waste liquid and gas. The reaction process does not consume other chemical reagents, which reduces the environmental impact and production cost.

### DETAILED DESCRIPTION OF THE EMBODIMENTS

In order to facilitate the understanding of the present disclosure, some examples of the present disclosure are listed below. Those skilled in the art should understand that these examples only help explain the present disclosure and should not be regarded as specific limitations to the present disclosure.

The technical solutions of the present disclosure will be further described below through specific embodiments.

In a specific embodiment, the present disclosure provides a method of clean recovery of palladium, including the following steps:
(1) The palladium-containing material, a Ce⁴⁺-containing acidic solution, and a chlorine-containing additive are mixed to obtain a mixed solution, and the mixed solution is subjected to a leaching reaction to obtain a Pd²⁺-containing solution, where a concentration of Ce⁴⁺ in the Ce⁴⁺-containing acidic solution is higher than or equal to 0.05 mol/L and a concentration of chloride in the mixed solution is 0.01 mol/L to 0.5 mol/L.
(2) The Pd²⁺-containing solution obtained in step (1) is subjected to electrolysis, such that palladium is produced at a cathode and a Ce⁴⁺-containing acidic solution reusable for leaching is produced at an anode.

It should be noted that the process provided in the examples of the present disclosure or a replacement or change of conventional data are within the protection scope and disclosure scope of the present disclosure.

### Example 1

In this example, a method for clean recovery of palladium was provided, including the following steps:
0.1 g of palladium powder and a specified amount of sodium chloride solid were mixed and ground for 1 min. A Ce⁴⁺-containing sulfuric acid solution was added to make [Cl] = 0.04 mol/L and [Ce⁴⁺] = 0.05 mol/L in a resulting mixed solution, and a leaching reaction was conducted at 80°C. The resulting leaching solution was filtered to remove a residual solid and a suspended matter to obtain a clear palladium sulfate leaching liquor. As calculated, the palladium leaching rate in this example was 99.8%.

### Example 2

In this example, a method for clean recovery of palladium was provided, including the following steps:
0.2 g of palladium powder and a specified amount of lithium chloride solid were mixed and ground for 5 min. A Ce⁴⁺-containing sulfuric acid solution was added to make [Cl] = 0.01 mol/L and [Ce⁴⁺] = 0.05 mol/L in a resulting mixed solution, and a leaching reaction was conducted at 60°C. The resulting leaching solution was filtered to remove a residual solid and a suspended matter to obtain a clear palladium sulfate leaching liquor. As calculated, the palladium leaching rate in this example was 99.6%.

### Example 3

In this example, a method for clean recovery of palladium was provided, including the following steps:
5 g of palladium powder and a specified amount of sodium chloride solid were mixed and ground for 30 min. A nitric acid solution of ceric ammonium nitrate was added to make [Cl] = 0.05 mol/L and [Ce⁴⁺] = 1 mol/L in a resulting mixed solution, and a leaching reaction was conducted at 40°C. The resulting leaching solution was filtered to remove a residual solid and a suspended matter to obtain a clear palladium nitrate leaching liquor. As calculated, the palladium leaching rate in this example was 99.7%.

### Example 4

In this example, a method for clean recovery of palladium was provided, including the following steps:
2.3 g of palladium powder was mixed with a Ce⁴⁺-containing sulfuric acid solution, then a specified amount of sodium chlorate solid was added to make [Cl] = 0.05 mol/L and [Ce⁴⁺] = 0.5 mol/L in a resulting mixed solution, and a leaching reaction was conducted at 80°C. The resulting leaching solution was filtered to remove a residual solid and a suspended matter to obtain a clear palladium sulfate leaching liquor. As calculated, the palladium leaching rate in this example was 99.8%.

### Example 5

In this example, a method for clean recovery of palladium was provided, including the following steps:
0.5 g of palladium powder was mixed with a Ce⁴⁺-containing nitric acid solution, then a specified amount of potassium chloride solid was added to make [Cl] = 0.27 mol/L and [Ce⁴⁺] = 0.1 mol/L in a resulting mixed solution, and a leaching reaction was conducted at 50°C. The resulting leaching solution was filtered to remove a residual solid and a suspended matter to obtain a clear palladium nitrate leaching liquor. As calculated, the palladium leaching rate in this example was 99.2%.

### Example 6

In this example, a method for clean recovery of palladium was provided, including the following steps:
0.9 g of palladium powder was mixed with a Ce⁴⁺-containing nitric acid solution, then a specified amount of acetyl chloride was added to make [Cl] = 0.01 mol/L and [Ce⁴⁺] = 0.2 mol/L in a resulting mixed solution, and a leaching reaction was conducted at 60°C. The resulting leaching solution was filtered to remove a residual solid and a suspended matter to obtain a clear palladium nitrate leaching liquor. As calculated, the palladium leaching rate in this example was 99.7%.

### Example 7

In this example, a method for clean recovery of palladium was provided, including the following steps:
245 mL of a 0.2 mol/L ceric nitrate solution was mixed with 5 mL of 0.5 mol/L hydrochloric acid to obtain a mixed solution with [Cl] = 0.01 mol/L and [Ce⁴⁺] = 0.196 mol/L, then 2.5 g of palladium powder with a purity of 91% was added, and a leaching reaction was conducted. The resulting leaching solution was filtered to remove a residual solid and a suspended matter to obtain a Pd²⁺-containing solution. As calculated, the palladium leaching rate in this example was 99.6%. The leaching liquor with Ce³⁺ and Pd²⁺ was subjected to electrolysis, such that Ce³⁺ was oxidized into Ce⁴⁺ (which could be returned for leaching) at an anode and Pd²⁺ was reduced into palladium with a purity of 99.5% at a cathode.

### Example 8

In this example, a method for clean recovery of palladium was provided, including the following steps:
A ceric ammonium nitrate-containing sulfuric acid solution was mixed with sodium chloride solid to make [Cl] = 0.17 mol/L and [Ce⁴⁺] = 1 mol/L in a resulting mixed solution, then 4.6 g of palladium powder was added with a molar ratio of Ce⁴⁺ to Pd being 2.4:1, and a leaching reaction was conducted at 60°C. The resulting leaching solution was filtered to remove a residual solid and a suspended matter to obtain a Pd²⁺-containing solution. As calculated, the palladium leaching rate in this example was 99.2%.

### Example 9

In this example, a method for clean recovery of palladium was provided, including the following steps:
A residue obtained after calcination of 100 g of a palladium-carbon catalyst with a palladium content of 50%, 0.7 g of sodium chloride solid, and 10 mL of water were mixed and ground for 5 min, then 800 mL of a 1.5 mol/L Ce⁴⁺-containing nitric acid solution was added to make [Cl] = 0.015 mol/L and [Ce⁴⁺] = 1.5 mol/L in a resulting mixed solution, and a leaching reaction was conducted at 60°C. The resulting leaching solution was filtered to remove a residual solid and a suspended matter to obtain a Pd²⁺-containing solution. As calculated, the palladium leaching rate in this example was 99.4%.

### Example 10

In this example, a method for clean recovery of palladium was provided, including the following steps:
A residue obtained after full calcination of a palladium-carbon catalyst in the air was mixed with a nitric acid solution with a chlorine content of 0.03 mol/L and a Ce⁴⁺ ion content of 1.5 mol/L (where a molar ratio of Ce⁴⁺ to Pd was 2.4:1), and a leaching reaction was conducted at 80°C. The resulting leaching solution was filtered to remove a residual solid and a suspended matter to obtain a Pd2+-containing solution. As calculated, the palladium leaching rate in this example was 99.5%.

### Example 11

In this example, a method for clean recovery of palladium was provided, including the following steps:
Ceric nitrate, concentrated nitric acid, monochloroacetic acid, and pure water were used to prepare a mixed solution with [Ce⁴⁺] = 1.5 mol/L, [H⁺] = 1 mol/L, and [Cl] = 0.5 mol/L. 20 g of palladium powder was added to 100 mL of the mixed solution, and a leaching reaction was conducted at 60°C. The resulting system was filtered to obtain an unreacted palladium powder and a leaching liquor. The mixed solution prepared above was taken and added to the unreacted palladium powder, and a leaching reaction was conducted once again to achieve complete dissolution. As calculated, the palladium leaching rate in this example was 100%.

### Example 12

In this example, a method for clean recovery of palladium was provided, including the following steps:
10 g of potassium chloride and 1 L of 0.1 mol/L dilute hydrochloric acid were added to 100 g of PdNi₅ alloy fragments, and a resulting mixture was heated to 40°C or higher to allow activation for 10 min. 10 L of a 0.11 mol/L ceric sulfate solution was added to the mixture, and a thorough leaching reaction was conducted at 60°C. A leaching liquor was subjected to electrolysis, such that Ce³⁺ was oxidized into Ce⁴⁺ (which could be returned for leaching) at an anode, and a potential at a cathode was controlled to reduce Pd²⁺ into palladium and then reduce Ni²⁺ into nickel. As calculated, the palladium leaching rate in this example was 99.5%.

### Comparative Example 1

In this comparative example, a method for clean recovery of palladium was provided, which was the method in Example 1 in the detailed description of CN109592722A, and an extracted palladium nitrate solution was prepared by the method. A large amount of yellow smoke (NOx) was produced during the reaction. Because nitric acid, aqua regia, a NOx tail gas absorber, and the like were used during the reaction, a large amount of waste liquid was produced, causing heavy environmental pollution.

For the palladium solution or palladium obtained by the method in each of Examples 1 to 12, a leaching rate was calculated as follows:

leaching rate = 1-[(palladium concentration in leaching liquor × volume of leaching liquor)/(palladium content in initial material × raw material mass)] × 100%.

Results showed that, in each of Examples 1 to 12, a palladium leaching rate was higher than 99%, no toxic gas was used in the leaching process, and no NOx was produced. Through electrolysis, the mother liquor was recycled without the generation of wastewater.

In summary, the present disclosure provides a method for clean recovery of palladium, where palladium is leached with a low-cost acidic Ce⁴⁺ solution as an oxidizing agent and chlorine as an additive, which completely eliminates the generation of a nitrogen oxide tail gas in the traditional process and realizes the clean extraction of palladium. A leaching liquor is subjected to electrolysis to realize the regeneration of Ce⁴⁺ and the preparation of palladium. The method of the present disclosure has a high palladium recovery rate, a low production cost, and promising application prospects.

The above are merely specific implementations of the present disclosure, and the protection scope of the present disclosure is not limited thereto. Any modification or replacement easily conceived by those skilled in the art within the technical scope of the present disclosure should fall within the protection scope of the present disclosure.

## Claims

1. A method for a clean recovery of palladium, comprising: mixing a palladium-containing material, a Ce⁴⁺-containing acidic solution, and an additive to obtain a mixed solution and conducting a leaching reaction on the mixed solution to obtain a Pd²⁺-containing solution.

2. The method according to claim 1, wherein the additive comprises chlorine.

3. The method according to claim 1, further comprising: subjecting the Pd²⁺-containing solution to an electrolysis, such that palladium from the electrolysis is produced at a cathode and a Ce⁴⁺-containing acidic solution from the electrolysis reusable for the leaching reaction is produced at an anode.

4. The method according to claim 1, wherein a concentration of Ce⁴⁺ in the Ce⁴⁺-containing acidic solution is higher than or equal to 0.05 mol/L.

5. The method according to claim 1, wherein a concentration of chlorine in the mixed solution obtained after the mixing is 0.01 mol/L to 0.5 mol/L.

6. The method according to claim 1, comprising the following steps:
(1) mixing the palladium-containing material, a Ce⁴⁺-containing sulfuric acid and/or nitric acid solution, and a chlorine-containing additive to obtain the mixed solution and subjecting the mixed solution to the leaching reaction at a temperature higher than or equal to 40°C to obtain the Pd²⁺-containing solution, wherein a concentration of Ce⁴⁺ in the Ce⁴⁺-containing acidic solution is higher than or equal to 0.05 mol/L and a concentration of chlorine in the mixed solution is 0.01 mol/L to 0.5 mol/L; and
(2) subjecting the Pd²⁺-containing solution obtained in step (1) to an electrolysis, such that palladium from the electrolysis is produced at a cathode and a Ce⁴⁺-containing acidic solution from the electrolysis reusable for the leaching reaction is produced at an anode.

7. The method according to claim 2, further comprising: subjecting the Pd²⁺-containing solution to an electrolysis, such that palladium from the electrolysis is produced at a cathode and a Ce⁴⁺-containing acidic solution from the electrolysis reusable for the leaching reaction is produced at an anode.

8. The method according to claim 2, wherein a concentration of Ce⁴⁺ in the Ce⁴⁺-containing acidic solution is higher than or equal to 0.05 mol/L.

9. The method according to claim 3, wherein a concentration of Ce⁴⁺ in the Ce⁴⁺-containing acidic solution is higher than or equal to 0.05 mol/L.

10. The method according to claim 2, wherein a concentration of the chlorine in the mixed solution obtained after the mixing is 0.01 mol/L to 0.5 mol/L.

11. The method according to claim 3, wherein a concentration of chlorine in the mixed solution obtained after the mixing is 0.01 mol/L to 0.5 mol/L.

12. The method according to claim 4, wherein a concentration of chlorine in the mixed solution obtained after the mixing is 0.01 mol/L to 0.5 mol/L.

13. The method according to claim 2, comprising the following steps:
(1) mixing the palladium-containing material, a Ce⁴⁺-containing sulfuric acid and/or nitric acid solution, and a chlorine-containing additive to obtain the mixed solution and subjecting the mixed solution to the leaching reaction at a temperature higher than or equal to 40°C to obtain the Pd²⁺-containing solution, wherein a concentration of Ce⁴⁺ in the Ce⁴⁺-containing acidic solution is higher than or equal to 0.05 mol/L and a concentration of chlorine in the mixed solution is 0.01 mol/L to 0.5 mol/L; and
(2) subjecting the Pd²⁺-containing solution obtained in step (1) to an electrolysis, such that palladium from the electrolysis is produced at a cathode and a Ce⁴⁺-containing acidic solution from the electrolysis reusable for the leaching reaction is produced at an anode.

14. The method according to claim 3, comprising the following steps:
(1) mixing the palladium-containing material, a Ce⁴⁺-containing sulfuric acid and/or nitric acid solution, and a chlorine-containing additive to obtain the mixed solution and subjecting the mixed solution to the leaching reaction at a temperature higher than or equal to 40°C to obtain the Pd²⁺-containing solution, wherein a concentration of Ce⁴⁺ in the Ce⁴⁺-containing acidic solution is higher than or equal to 0.05 mol/L and a concentration of chlorine in the mixed solution is 0.01 mol/L to 0.5 mol/L; and
(2) subjecting the Pd²⁺-containing solution obtained in step (1) to the electrolysis, such that the palladium from the electrolysis is produced at the cathode and the Ce⁴⁺-containing acidic solution from the electrolysis reusable for the leaching reaction is produced at the anode.

15. The method according to claim 4, comprising the following steps:
(1) mixing the palladium-containing material, a Ce⁴⁺-containing sulfuric acid and/or nitric acid solution, and a chlorine-containing additive to obtain the mixed solution and subjecting the mixed solution to the leaching reaction at a temperature higher than or equal to 40°C to obtain the Pd²⁺-containing solution, wherein a concentration of chlorine in the mixed solution is 0.01 mol/L to 0.5 mol/L; and
(2) subjecting the Pd²⁺-containing solution obtained in step (1) to an electrolysis, such that palladium from the electrolysis is produced at a cathode and a Ce⁴⁺-containing acidic solution from the electrolysis reusable for the leaching reaction is produced at an anode.

16. The method according to claim 5, comprising the following steps:
(1) mixing the palladium-containing material, a Ce⁴⁺-containing sulfuric acid and/or nitric acid solution, and a chlorine-containing additive to obtain the mixed solution and subjecting the mixed solution to the leaching reaction at a temperature higher than or equal to 40°C to obtain the Pd²⁺-containing solution, wherein a concentration of Ce⁴⁺ in the Ce⁴⁺-containing acidic solution is higher than or equal to 0.05 mol/L and a concentration of chlorine in the mixed solution is 0.01 mol/L to 0.5 mol/L; and
(2) subjecting the Pd²⁺-containing solution obtained in step (1) to an electrolysis, such that palladium from the electrolysis is produced at a cathode and a Ce⁴⁺-containing acidic solution from the electrolysis reusable for the leaching reaction is produced at an anode.
